# EUROPÄISCHE PATENTANMELDUNG

(11) **EP 1 327 810 A2**
(43) Veröffentlichungstag der Anmeldung: **16.07.2003**
(21) Anmeldenummer: 03075059.0
(22) Anmeldetag: 07.01.2003
(51) Int. Cl.: F16K 31/40

(54) **Ventilanordnung zum Einsetzen in Vakuumanlagen**

(30) Priorität: 12.01.2002 DE 10200979
(71) Anmelder: Danfoss A/S, 6430 Nordborg (DK)
(72) Erfinder: Birkelund, Michael, 5500 Middelfart (DK)

(57) **Zusammenfassung**

Eine Ventilanordnung zum Einsetzen in Vakuumanlagen hat ein Gehäuse (1) mit einer Eingangsöffnung (3) und einer Ausgangsöffnung (5), zwischen denen ein Hauptventil (7) mit einem durch eine erste Feder (11) belasteten Verschlußstück (9) und ein durch einen Elektromagneten (18) betätigbares Hilfsventil (15) mit kleinerer Nennweite als die des Hauptventils (7) angeordnet sind.

Um die Ventilanordnung zu vereinfachen und mit weniger Energie zu betätigen, ist das Verschlußstück (9) des Hauptventils (7) durch die erste Feder (11) in Öffnungsrichtung belastet und die Kraft der ersten Feder (11) größer als eine vorbestimmte, durch die Druckdifferenz zwischen Ein- und Ausgangsöffnung (3, 5) bei geöffnetem Hilfsventil (15) auf das Verschlußstück (9) des Hauptventils (7) ausgeübte Schließkraft.

## Beschreibung

Die Erfindung bezieht sich auf eine Ventilanordnung zum Einsetzen in Vakuumanlagen, mit einem Gehäuse, das eine Eingangsöffnung und eine Ausgangsöffnung aufweist, zwischen denen ein Hauptventil mit einem durch eine erste Feder belasteten Verschlußstück und ein durch einen Elektromagneten betätigbares Hilfsventil mit kleinerer Nennweite als die des Hauptventils angeordnet sind.

Bei einer bekannten Ventilanordnung dieser Art, die im Handel erhältlich ist und über die eine Kammer durch eine Vakuumpumpe evakuiert wird, sind das Haupt- und das Hilfsventil parallel angeordnet. Das Hilfsventil ist ein Magnetventil. Zu Beginn des Betriebs der Vakuumpumpe sind beide Ventile zunächst noch geschlossen. Dann wird kurze Zeit nach Betriebsbeginn der Vakuumpumpe das Hilfsventil geöffnet. Dadurch fällt der Druck in der zu evakuierenden Kammer. Wegen der geringen Nennweite (bzw. des geringen Durchflußquerschnitts oder des geringen Kᵥ-Wertes) des Hilfsventils wird die Vakuumpumpe nicht plötzlich mit einem hohen Massenstrom oder Druckimpuls belastet und dementsprechend nicht überlastet. Einige Zeit später wird das Hauptventil durch einen Elektromagneten oder druckluftgesteuerten Aktuator gegen die Kraft der ersten Feder geöffnet und die Kammer bis auf den gewünschten Wert über die größere Nennweite des Hauptventils weiter evakuiert.

Der Erfindung liegt die Aufgabe zugrunde, eine Ventilanordnung der eingangs geschilderten Art anzugeben, die einfacher und kompakter aufgebaut ist und mit weniger Betätigungsenergie auskommt.

Erfindungsgemäß ist diese Aufgabe dadurch gelöst, daß das Verschlußstück des Hauptventils durch die erste Feder in Öffnungsrichtung belastet ist und daß die Kraft der ersten Feder größer als eine vorbestimmte, durch die Druckdifferenz zwischen Ein- und Ausgangsöffnung bei geöffnetem Hilfsventil auf das Verschlußstück des Hauptventils ausgeübte Schließkraft ist.

Bei dieser Lösung genügt zum Öffnen des Hauptventils allein die erste Feder, die zudem schwach und klein ausgelegt sein kann, da sie das Hauptventil nur gegen einen relativ niedrigen Differenzdruck zwischen Ein- und Ausgangsöffnung des Gehäuses zu öffnen braucht.

Besonders günstig ist es, wenn der Ventilsitz des Hilfsventils durch eine das Verschlußstück des Hauptventils durchsetzende Bohrung gebildet ist. Dabei bildet das Hauptventil zugleich einen Teil des Hilfsventils. Dadurch ergibt sich ein noch einfacherer und kompakterer Aufbau der Ventilanordnung, da ein separates Bauteil für den Ventilsitz des Hilfsventils entfällt.

Sodann kann die Kraft der ersten Feder kleiner als die einer zweiten Feder sein, gegen deren Kraft das Hilfsventil durch den Elektromagneten geöffnet wird. Nach dem Ausschalten des Elektromagneten bewirkt dann die Kraft der zweiten Feder auch das Schließen des Hauptventils, so daß ein Aktuator für das Hauptventil entfällt.

Vorzugsweise ist dafür gesorgt, daß das Gehäuse einen zylindrischen Gehäuseteil aufweist, in dem das Hauptventil koaxial ausgebildet ist und das Verschlußstück des Hauptventils koaxial und quer zu einem die Eingangsöffnung aufweisenden Anschlußstutzen geführt ist. Hierbei kann das Verschlußstück des Hauptventils auf einem größeren Umkreis als dem des Ventilsitzes des Hauptventils ausgebildete, axial durchgehende Aussparungen aufweisen. Auf diese Weise wird vermieden, daß Hohlräume im Gehäuse verbleiben, in denen sich beim Evakuieren ein das Öffnen des Hauptventils erschwerender Luftdruck ausbilden könnte.

Wenn der Gesamtquerschnitt der Aussparungen größer als die Nennweite des Hilfsventils ist, ist sichergestellt, daß der gesamte Hohlraum des Ventilgehäuses ebenso wie die zu evakuierende Kammer evakuiert und deren Evakuierung nicht erschwert wird.

Die Erfindung und ihre Weiterbildungen werden nachstehend anhand der beiliegenden Zeichnungen eines bevorzugten Ausführungsbeispiels näher beschrieben. Darin stellen schematisch dar:
- Fig. 1: einen Axialschnitt durch das erfindungsgemäße Ausführungsbeispiel einer Ventilanordnung zum Einsetzen zwischen einer Vakuumpumpe und einer zu evakuierenden Kammer in geschlossenem Zustand,
- Fig. 2: den gleichen Axialschnitt wie den nach Fig. 1, jedoch bei geöffnetem Hilfsventil der Ventilanordnung und
- Fig. 3: den gleichen Axialschnitt wie den nach Fig. 1 im vollständig geöffneten Zustand der Ventilanordnung.

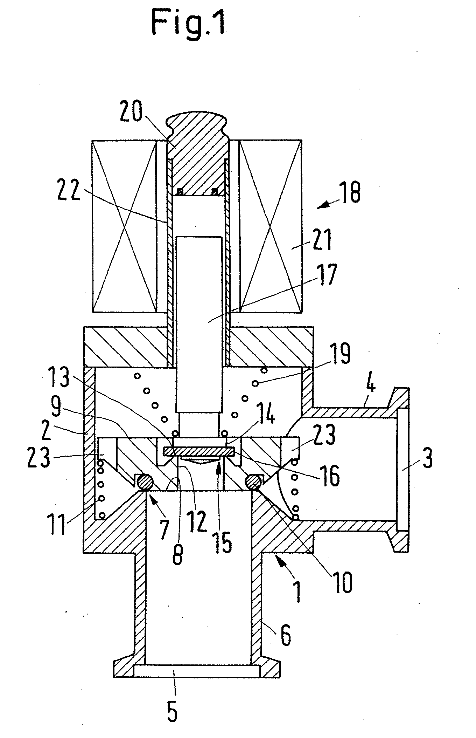

Die in den Fig. 1 bis 3 dargestellte Ventilanordnung wird zwischen einer (nicht dargestellten) zu evakuierenden Kammer und einer (nicht dargestellten) Vakuumpumpe eingesetzt.

Die Ventilanordnung hat ein Gehäuse 1 mit einem zylindrischen Gehäuseteil 2, einer Eingangsöffnung 3 in einem quer zum Gehäuseteil 2 stehenden Anschlußstutzen 4 für die zu evakuierende Kammer und einer Ausgangsöffnung 5 in einem zum Gehäuseteil 2 koaxialen Anschlußstutzen 6 für die Vakuumpumpe.

Im Gehäuseteil 2 ist ein Hauptventil 7 mit einem Ventilsitz 8 und einem Verschlußstück 9 ausgebildet. Das Verschlußstück 9 hat einen Dichtring 10, über den es auf dem Ventilsitz 8 aufsitzt, und ist durch eine Feder 11 in Öffnungsrichtung belastet. Das Verschlußstück 9 hat eine zum Gehäuseteil 2 und Anschlußstutzen 6 koaxiale, abgestufte Bohrung 12, die mit ihrer inneren Schulter den Sitz 13 für das Verschlußstück 14 eines Hilfsventils 15 bildet. Das Verschlußstück 14 sitzt über eine Dichtringscheibe 16 auf dem Ventilsitz 13 auf.

Das Verschlußstück 14 ist am einen Ende des Ankers 17 eines Elektromagneten 18 ausgebildet. Im ausgeschalteten Zustand des Elektromagneten 18 wird das Verschlußstück 14 durch eine Feder 19, die stärker als die Feder 11 ist, gegen den Ventilsitz 13 gedrückt. Die Kraft des eingeschalteten Elektromagneten 18 ist größer als die Kraft der Feder 19 und die bei geschlossenen Ventilen 7 und 15, aber eingeschalteter Vakuumpumpe, auf das Verschlußstück 14 zusätzlich ausgeübte Druckkraft. Die Feder 11 ist so bemessen, daß sie bei eingeschaltetem Elektromagneten 18 und demzufolge geöffnetem Hilfsventil 15 das Hauptventil 7 öffnet, sobald die Druckdifferenz zwischen Eingangsöffnung 3 und Ausgangsöffnung 5 einen vorbestimmten relativ kleinen Wert unterschreitet. Die durch die Feder 11 zu überwindende Kraft ist dann gleich der Druckdifferenz multipliziert mit der Differenz zwischen der Querschnittsfläche A₁ der Bohrung des Anschlußstutzens 6 und der Querschnittsfläche A₂ der Bohrung 12. Die Querschnittsfläche A₂ der Bohrung 12 des Hilfsventils 15 kann sehr viel kleiner als die der Bohrung des Anschlußstutzens 6 sein. Im dargestellten Beispiel liegt das Verhältnis A₁/A₂ der Querschnittsflächen bei etwa 5,17. Es kann aber auch größer gewählt werden. Daher kann der vorbestimmte Wert des Differenzdrucks und dementsprechend die Kraft der Feder 11, bei der das Hauptventil 7 geöffnet wird, nachdem das Hilfsventil 15 geöffnet wurde, entsprechend klein gewählt werden.

Die dargestellte Ventilanordnung hat daher folgende Funktion bzw. wird folgendermaßen betrieben:

Zunächst wird die Vakuumpumpe eingeschaltet, während der Elektromagnet 18 noch ausgeschaltet bleibt. Beide Ventile 7 und 15 bleiben daher solange unter dem Saugdruck der Vakuumpumpe 9 und der Kraft der Feder 19 geschlossen, wie der Elektromagnet 18 ausgeschaltet ist. Dieser Zustand ist in Fig. 1 dargestellt.

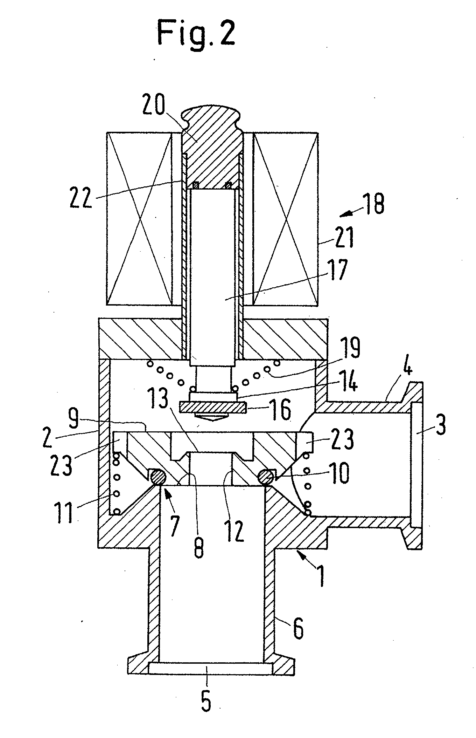

Wenn dann der Elektromagnet 18 eingeschaltet wird, wird der Anker 17 bis gegen den Kern 20 in einer in der Spule 21 des Elektromagneten befestigten Führungshülse 22 angezogen und das Verschlußstück 14 von seinem Ventilsitz 13 gegen die Kraft der Feder 19 abgehoben, wie es in Fig. 2 dargestellt ist.

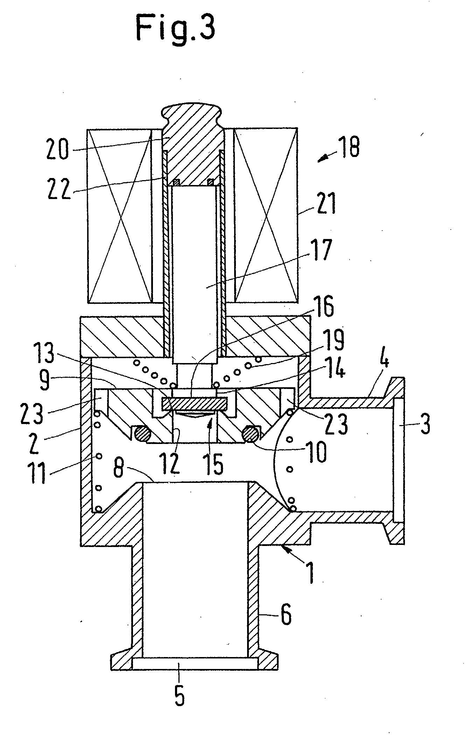

Daraufhin sinkt der Differenzdruck zwischen Ein- und Ausgangsöffnung 3 und 5 aufgrund des über das geöffnete Hilfsventil 15 einsetzenden Druckausgleichs allmählich ab. Die Vakuumpumpe wird hierbei nicht durch den plötzlich einsetzenden Massenstrom oder Druckimpuls überlastet, da die Nennweite, d.h. die maximale Öffnungsweite, des Hilfsventils 15 relativ gering und wesentlich kleiner als die des Hauptventils 7 ist, so daß der von der Vakuumpumpe angesaugte Massenstrom entsprechend gedrosselt ist. Wenn jetzt die Druckdifferenz am Verschlußstück 9 den vorbestimmten Wert unterschreitet, öffnet die relativ schwache Feder 11 auch das Hauptventil 7, wie es in Fig. 3 dargestellt ist, so daß nunmehr beide Ventile 7 und 15 geöffnet sind und die Evakuierung der an der Eingangsöffnung 3 bzw. dem Stutzen 4 angeschlossenen Kammer über die volle Öffnungsweite des Hauptventils 7 weitgehend ungehindert bis zu dem gewünschten Unterdruck fortgesetzt werden kann.

Da das Verschlußstück 9 des Hauptventils 7 gleichzeitig der Ausbildung des Ventilsitzes 13 des Hilfsventils 15 dient, entfällt ein separates Bauteil für die Ausbildung des Ventilsitzes 13. Sodann kommt man ohne einen energiebetriebenen Aktuator für das Hauptventil 7 aus. Vielmehr genügt zum Öffnen des Hauptventils 7 allein die schwache Feder 11, da das Hauptventil 7 immer erst dann geöffnet wird, wenn das Hilfsventil 15 bereits geöffnet und der Differenzdruck am Verschlußstück 9 unter den vorbestimmten geringen Wert abgefallen ist.

Auf einem größeren Umkreis als dem des Ventilsitzes 8 des Hauptventils 7 sind axial durchgehende Aussparungen 23 im Verschlußstück 9 ausgebildet, hier am Umfang des Verschlußstücks 9, deren Gesamtquerschnittsfläche größer als die Nennweite (die maximale Öffnungsweite) des Hilfsventils 15 ist. Dadurch wird vermieden, daß geschlossene Hohlräume im Gehäuse 1 verbleiben, in denen sich beim Evakuieren ein das Öffnen des Hauptventils 7 erschwerender Luftdruck zwischen dessen Verschlußstück 9 und dem oberen Bereich des Gehäuseteils 2 ausbilden könnte, während das Verschlußstück 9 in dem Gehäuseteil 2 unter der Kraft der Feder 11 vom Ventilsitz 8 weggeführt wird. Diese Aussparungen 23 könnten, statt als Nuten, wie dargestellt, auch als axial durchgehende Bohrungen im Verschlußstück 9 ausgebildet sein, sofern sie auf einem größeren Umkreis als dem des Ventilsitzes 8 und mit einer größeren Gesamtquerschnittsfläche als die Öffnungsweite des Hilfsventils 15 ausgebildet sind.

Insgesamt ist nur eine geringe Betätigungsenergie zum Öffnen der Ventilanordnung allein durch den Elektromagneten 18 aufzubringen.

Eine Abwandlung des dargestellten Ausführungsbeispiels kann darin bestehen, daß die Feder 11 zwischen Anker 17 und Verschlußstück 9 befestigt ist, so daß sie als Zugfeder wirkt und in der Ventilschließstellung nach Fig. 1 entspannt ist. Insbesondere kann sie mit ihrem einen Ende am Verschlußstück 14 und mit ihrem anderen Ende radial außerhalb des Ventilsitzes 8, bei entsprechend kleiner bemessener Dichtringscheibe 16, auf der inneren Schulter des Verschlußstücks 9 befestigt sein.

## Patentansprüche

1. Ventilanordnung zum Einsetzen in Vakuumanlagen, mit einem Gehäuse (1), das eine Eingangsöffnung (3) und eine Ausgangsöffnung (5) aufweist, zwischen denen ein Hauptventil (7) mit einem durch eine erste Feder (11) belasteten Verschlußstück (9) und ein durch einen Elektromagneten (18) betätigbares Hilfsventil (15) mit kleinerer Nennweite als die des Hauptventils (7) angeordnet sind, **dadurch gekennzeichnet, daß** das Verschlußstück (9) des Hauptventils (7) durch die erste Feder (11) in Öffnungsrichtung belastet ist und daß die Kraft der ersten Feder (11) größer als eine vorbestimmte, durch die Druckdifferenz zwischen Ein- und Ausgangsöffnung (3, 5) bei geöffnetem Hilfsventil (15) auf das Verschlußstück (9) des Hauptventils (7) ausgeübte Schließkraft ist.

2. Ventilanordnung nach Anspruch 1, **dadurch gekennzeichnet, daß** der Ventilsitz (13) des Hilfsventils (15) durch eine das Verschlußstück (9) des Hauptventils (7) durchsetzende Bohrung (12) gebildet ist.

3. Ventilanordnung nach Anspruch 2, **dadurch gekennzeichnet, daß** die Kraft der ersten Feder (11) kleiner als die einer zweiten Feder (19) ist, gegen deren Kraft das Hilfsventil (15) durch den Elektromagneten (18) geöffnet wird.

4. Ventilanordnung nach einem der Ansprüche 1 bis 3, **dadurch gekennzeichnet, daß** das Gehäuse (1) einen zylindrischen Gehäuseteil (2) aufweist, in dem das Hauptventil (7) koaxial ausgebildet ist und das Verschlußstück (9) des Hauptventils (7) koaxial und quer zu einem die Eingangsöffnung (3) aufweisenden Anschlußstutzen (4) geführt ist.

5. Ventilanordnung nach Anspruch 4, **dadurch gekennzeichnet, daß** das Verschlußstück (9) des Hauptventils (7) auf einem größeren Umkreis als dem des Ventilsitzes (8) des Hauptventils (7) ausgebildete, axial durchgehende Aussparungen (23) aufweist.

6. Ventilanordnung nach Anspruch 5, **dadurch gekennzeichnet, daß** der Gesamtquerschnitt der Aussparungen (23) größer als die Nennweite des Hilfsventils (15) ist.
